(19) Europäisches Patentamt
European Patent Office
Office européen des brevets

(11) **EP 1 525 635 B1**

(12) **FASCICULE DE BREVET EUROPEEN**

(45) Date de publication et mention
de la délivrance du brevet:
**05.05.2010 Bulletin 2010/18**

(21) Numéro de dépôt: **03756507.4**

(22) Date de dépôt: **25.07.2003**

(51) Int Cl.:
***H01M 8/04*** *(2006.01)*    ***H01M 8/10*** *(2006.01)*

(86) Numéro de dépôt international:
**PCT/FR2003/002346**

(87) Numéro de publication internationale:
**WO 2004/012319 (05.02.2004 Gazette 2004/06)**

(54) **SYSTEME DE TRACTIION ELECTRIQUE POUR VEHICULE AUTOMOBILE ET PROCEDE DE MISE EN OEUVRE D'UNE PILE A COMBUSTIBLE**

ELEKTRISCHES ANTRIEBSSYSTEM FÜR KRAFTFAHRZEUG UND BETRIEBSVERFAHREN FÜR EINE BRENNSTOFFZELLE

ELECTRIC MOTIVE POWER SYSTEM FOR MOTOR VEHICLE AND METHOD FOR USING A FUEL CELL

(84) Etats contractants désignés:
**AT BE BG CH CY CZ DE DK EE ES FI FR GB GR HU IE IT LI LU MC NL PT RO SE SI SK TR**

(30) Priorité: **25.07.2002 FR 0209453**

(43) Date de publication de la demande:
**27.04.2005 Bulletin 2005/17**

(73) Titulaire: **RENAULT S.A.S.**
**92100 Boulogne Billancourt (FR)**

(72) Inventeurs:
• **ARCHER, Pascal**
  **F-75014 Paris (FR)**
• **CORNET, Nathalie**
  **F-78960 Voisins Le Bretonneux (FR)**

(56) Documents cités:
EP-A- 1 033 769    DE-A- 19 918 850
US-A- 5 260 143    US-A1- 2002 001 744
US-B1- 6 379 829

• DATABASE WPI Section EI, Week 200224 Derwent Publications Ltd., London, GB; Class X16, AN 2002-185963 XP002245302 & KR 2001 093 359 A (SAMSUNG ELECTRONICS CO LTD) 29 octobre 2001 (2001-10-29)

**Description**

La présente invention concerne un système de traction électrique pour véhicule automobile, ainsi qu'un procédé de mise en oeuvre d'une pile à combustible.

La pile à combustible apparaît de plus en plus comme le convertisseur d'énergie le plus propre et le plus efficace pour convertir l'énergie chimique en une énergie directement utilisable sous forme électrique et thermique.

Son principe de fonctionnement est simple : il s'agit d'une combustion électrochimique et contrôlée d'hydrogène et d'oxygène, avec production simultanée d'électricité, d'eau et de chaleur, selon la réaction chimique : $H_2 + 1/2\ O_2 \rightarrow H_2O$. Cette réaction s'opère au sein d'une structure essentiellement composée de deux électrodes, l'anode et la cathode, séparées par un électrolyte : c'est la réaction inverse de l'électrolyse de l'eau.

L'une des contraintes liées à l'emploi de la pile à combustible dans un véhicule automobile repose sur la récupération de l'eau. Pour ce faire, un système de refroidissement des gaz sortant de la pile à combustible est nécessaire. Celui-ci permet de condenser l'eau nécessaire, notamment pour alimenter un reformeur. Pour obtenir un bilan d'eau positif sur le système, c'est-à-dire pour que la quantité d'eau produite par la pile soit supérieure à la quantité d'eau consommée par le reformeur, il est nécessaire d'amener les gaz sortant de la pile à une température appelée " température basse " (température de l'eau en sortie de condenseur) pour récupérer toute l'eau nécessaire. Pour des raisons liées au circuit de refroidissement, (diminution de la consommation des auxiliaires et des volumes), cette température doit être la plus élevée possible.

Le document KR-2001096359A propose une pile à combustible qui comprend une membrane multicouche particulière qui empêche l'eau de se déplacer de la cathode vers l'anode. Des composés particuliers (matériau absorbant l'eau, catalyseur) sont ajoutés dans des couches différentes. Le but recherché est de tenter de conserver une hydratation suffisante à la cathode pour éviter les problèmes de dégradation de la membrane du côté cathodique.

La présente invention propose un système de traction électrique pour véhicule automobile qui permet d'obtenir une valeur élevée de la température basse de sortie des gaz de la pile à combustible.

L'invention a également pour objet un procédé de mise en oeuvre d'une pile à combustible dans un système de traction électrique pour véhicule automobile.

Le système de traction électrique pour véhicule automobile selon l'invention comprend une pile à combustible présentant au moins un ensemble de deux électrodes munies chacune d'une entrée et d'une sortie d'électrode, une membrane électrolytique située entre les deux électrodes. La membrane électrolytique comprend des charges conductrices de protons réparties dans l'épaisseur de la membrane selon un gradient de concentration, de façon à concentrer l'eau à l'état liquide, produite par la pile à combustible, sur une des électrodes. L'eau à l'état liquide ainsi concentrée est évacuée de la pile à combustible par une unique sortie d'électrode.

Le gradient de concentration des charges conductrices de protons présentes dans la membrane peut être continu. On peut également concevoir une membrane multi-couches, où chaque couche présente une concentration en charges conductrices différente. La membrane peut être de type polymère. Ainsi, le gradient de concentration en charges conductrices peut être obtenu par coulées successives de solutions de polymères de différentes masses équivalentes, c'est-à-dire présentant des concentrations en charges conductrices différentes. Ce type de membrane peut être élaboré de préférence avec tout polymère conducteur protonique pouvant être mis en solution et possédant de bonnes propriétés filmogènes permettant la réalisation de couches de membrane très fines (de l'ordre de la dizaine de micromètres).

La température basse est fonction de la pression du système et de la quantité de gaz secs emportant l'eau. Elle suit la loi :

$$n_v = p\,(T)*n_s/(P - p\,(T))$$

avec

$n_v$ : débit d'eau sous forme gazeuse envoyée à l'échapppement

$n_s$ : débit de gaz secs emportant l'eau sous forme vapeur

$P$ : pression totale du système

$p\,(T)$ : pression partielle de l'eau à la température en sortie de condenseur

$T$ : tempéature de l'eau en sortie de condenseur.

En reformulant cette expression sous la forme :

$p(T) = P\,/(1+ n_s/\,n_v)$, on constate qu'en diminuant la quantité de gaz secs emportant la vapeur, la valeur de $p(T)$ est augmentée et donc également la valeur de $T$.

L'invention utilise cette constatation. En concentrant l'eau sur une seule électrode, on diminue le débit de gaz secs emportant la vapeur et on augmente ainsi la valeur de la température basse T.

L'eau à l'état liquide produite par la pile à combustible peut être concentrée soit sur l'anode soit sur la cathode.

Pour concentrer l'eau à l'état liquide produite par la pile à combustible sur la cathode, il suffit de placer la membrane de telle sorte que la concentration maximale en charges conductrices de la membrane soit située du côté de la cathode, ou, dans le cas d'une membrane multi-couches, que la couche la plus concentrée en charges conductrices soit située du côté de la cathode. On limite ainsi le processus de rétrodiffusion d'une partie de l'eau produite à la cathode vers l'anode.

Toutefois, on concentre de préférence l'eau à l'état liquide produite par la pile à combustible sur l'anode, car la température basse obtenue est en général plus élevée que lorsque l'eau est concentrée à la cathode. De plus, le mode de fonctionnement avec concentration de l'eau à l'anode est plus aisé à réaliser en pratique. Dans ce cas, la membrane est placée entre l'anode et la cathode de manière à ce que la concentration maximale en charges conductrices de la membrane soit située du côté de l'anode, ou, dans le cas d'une membrane multi-couches, que la couche la plus concentrée en charges conductrices soit située du côté de l'anode. L'eau est ainsi fortement attirée vers l'anode, ce qui entraîne un flux de rétrodiffusion de l'eau produite à la cathode vers l'anode et permet de récupérer à l'anode la quasi-totalité de l'eau produite à la cathode.

De préférence, l'unique sortie d'électrode précitée de la pile à combustible est reliée à un unique condenseur. L'invention permet ainsi de n'utiliser qu'un seul condenseur au lieu de deux, et de donc de gagner un volume de condenseur.

Le condenseur peut alimenter un réservoir d'eau. Ce réservoir d'eau est relié à un reformeur. Ainsi, l'eau condensée issue du condenseur peut alimenter un reformeur capable de fournir de l'hydrogène à la pile à combustible, à partir d'un carburant.

Le système de traction électrique peut comprendre en outre un brûleur relié à l'anode pour récupérer l'énergie des gaz issus de l'anode. Dans le cas où l'eau à l'état liquide produite par la pile à combustible est concentrée sur l'anode, le brûleur peut être placé en aval du condenseur.

L'invention a également pour objet un procédé de mise en oeuvre d'une pile à combustible dans un système de traction électrique pour véhicule automobile. Le procédé comprend les étapes principales successives suivantes :

- concentration de l'eau à l'état liquide produite par la pile à combustible sur une des électrodes à l'aide d'une membrane électrolytique comprenant des charges conductrices de protons réparties dans l'épaisseur de la membrane selon un gradient de concentration,
- vaporisation dans cette électrode de l'eau à l'état liquide ainsi concentrée,
- condensation de l'eau vaporisée dans un condenseur relié à la sortie de ladite électrode,
- utilisation de l'eau ainsi condensée pour alimenter un reformeur capable de générer de l'hydrogène alimentant la pile à combustible.

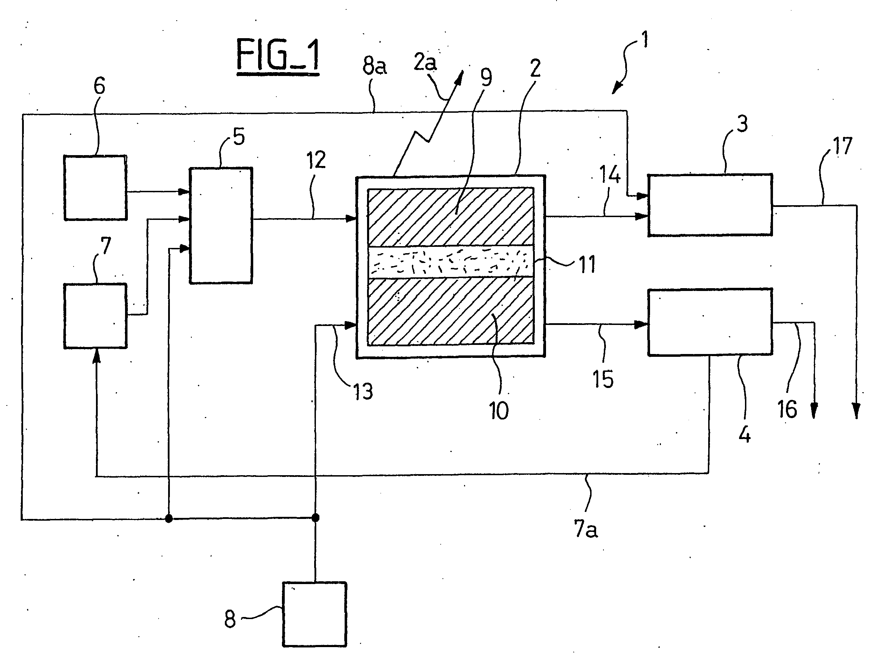

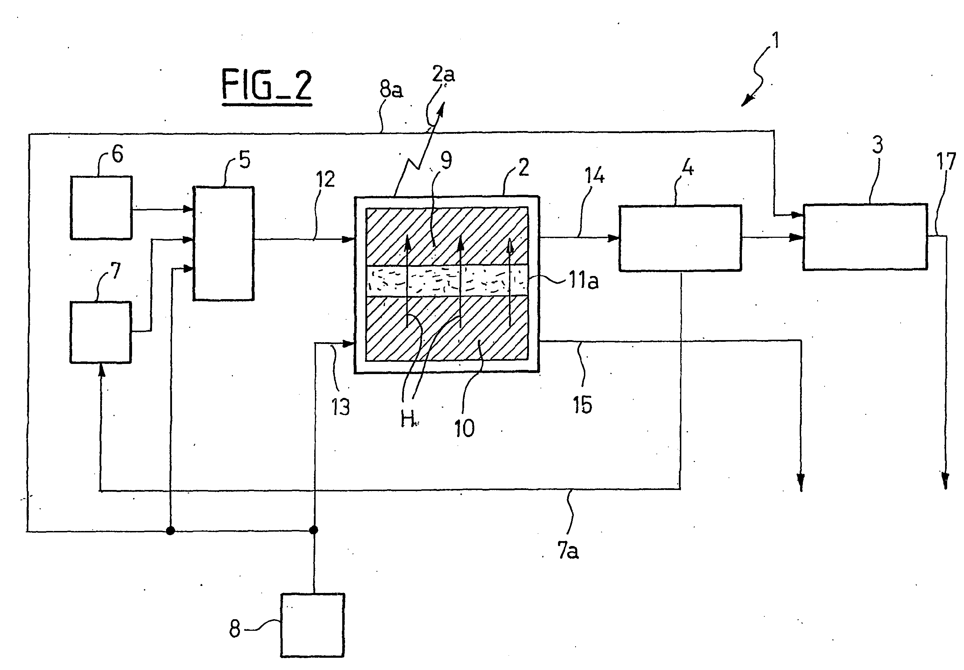

D'autres avantages et caractéristiques de l'invention apparaîtront à l'examen de la description détaillée de deux modes de mise en oeuvre nullement limitatifs du système de traction électrique selon l'invention et illustrés par les figures 1 et 2 sur lesquelles :

- la figure 1 illustre un sous-ensemble d'un système de traction électrique pour véhicule automobile selon un premier mode de réalisation de l'invention,
- la figure 2 illustre un sous-ensemble d'un système de traction électrique pour véhicule automobile selon un deuxième mode de réalisation de l'invention.

La figure 1 montre un sous-ensemble 1 d'un système de traction électrique pour véhicule automobile. Le sous-ensemble 1 comprend une pile à combustible 2, reliée à un brûleur 3, à un condenseur 4, et à un reformeur 5.

La pile à combustible 2 est munie d'une anode 9 et d'une cathode 10, séparées par une membrane électrolytique 11. Le courant électrique produit par la pile 2 est acheminé par la connexion 2a vers des moyens de traitement et un moteur électrique de traction non représentés. La pile à combustible 2 est alimentée à l'entrée d'anode 12 par de l'hydrogène généré par le reformeur 5. Le reformeur 5 est alimenté en hydrocarbure stocké dans un réservoir de carburant 6, en eau issue du réservoir d'eau 7, et en air issu du dispositif d'alimentation en air 8. La pile à combustible est également alimentée en air à l'entrée de cathode 13 grâce au dispositif d'alimentation en air 8.

A l'anode 9, l'hydrogène issu du reformeur 5 se transforme en ions $H^+$ en libérant des électrons selon la réaction suivante :

$$H_2 \rightarrow 2H^+ + 2 \text{ électrons}$$

A la cathode 10, l'oxygène de l'air acheminé par le dispositif d'alimentation en air 8 va capturer des électrons pour former de l'oxygène ionisé selon la réaction :

$$0,5\ O_2 + 2\ \text{électrons} \rightarrow O^{2-}$$

Les protons H$^+$ sont véhiculés par la membrane 11 vers la cathode 10 pour aller réagir avec l'oxygène de l'air. La réaction est la suivante:

$$2H^+ + 0,5\ O_2 + 2\ \text{électrons} \rightarrow H_2O_{\text{liquide}}$$

Dans ce premier mode de réalisation de l'invention, la membrane 11 empêche l'eau liquide produite sur la cathode 10 de rétrodiffuser vers l'anode 9. Ceci peut être réalisé à l'aide d'une membrane multi-couches comprenant des charges conductrices de protons réparties dans l'épaisseur de la membrane 11 selon un gradient de concentration, la couche la plus concentrée en charges conductrices de la membrane 11 étant située du côté de la cathode 10, de telle sorte que l'eau ne peut rétrodiffuser vers l'anode 9.

L'eau liquide est donc concentrée à la cathode 10. L'eau liquide est ensuite vaporisée sous l'effet de la chaleur régnant dans la pile à combustible 2, puis cette vapeur est emportée par les gaz cathodiques en sortie de cathode 15.

Ainsi, en concentrant l'eau à la cathode 10, seuls les gaz cathodiques sortent humides. Le débit de gaz sec emportant la vapeur est donc diminué et comme vu plus haut, on augmente ainsi la température basse T. Ainsi, pour une pile à combustible fonctionnant à 80°C et 3 bar absolus, dans le cas d'un fonctionnement classique avec récupération d'eau à l'anode et à la cathode, la température basse est proche de 61°C. Avec une concentration de l'eau à la cathode, cette température est proche de 71°C.

Les gaz sortant de la cathode 10 en sortie de cathode 15 sont acheminés vers le condenseur 4. Le condenseur 4 sert de source froide et permet de condenser la vapeur d'eau contenue dans les gaz cathodiques. L'eau ainsi condensée est ensuite acheminée par la conduite 7a vers le réservoir d'eau 7 destiné à alimenter en eau le reformeur 5. Les gaz non condensés sont évacués du circuit par la sortie de condenseur 16. Aucun condenseur n'étant nécessaire sur la sortie d'anode 14, l'invention permet de n'utiliser qu'un seul condenseur 4 au lieu de deux, et de donc de gagner un volume de condenseur.

Les gaz sortant de l'anode 9 en sortie d'anode 14 comprennent des gaz neutres issus du reformeur 5 et l'hydrogène également issu du reformeur 5 qui n'a pas réagi dans la pile à combustible 2. Ces gaz sont dépourvus de vapeur d'eau puisque celle-ci est concentrée à la cathode 10. Ils sont acheminés vers le brûleur 3, également alimenté en air via la conduite 8a par le dispositif d'alimentation en air 8. Les gaz issus du brûleur 3 sont évacués du circuit en sortie de brûleur 17.

La figure 2, sur laquelle les éléments identiques portent les mêmes références, montre un sous-ensemble 1 d'un système de traction électrique pour véhicule automobile selon un deuxième mode de réalisation de l'invention.

Dans ce mode de réalisation, l'eau liquide produite par la pile à combustible 2 est concentrée à l'anode 9, dans le sens indiqué par les flèches H. Cette concentration à l'anode 9 est réalisée à l'aide de la membrane multi-couches 11a. La membrane 11a comprend des charges conductrices de protons réparties dans l'épaisseur de la membrane 11a selon un gradient de concentration, la couche la plus concentrée en charges conductrices étant située du côté de l'anode 9. L'eau est ainsi fortement attirée vers l'anode 9, ce qui entraîne un flux de rétrodiffusion de l'eau produite à la cathode 10 vers l'anode 9 dans le sens indiqué par les flèches H et permet de récupérer à l'anode 9 la quasi-totalité de l'eau produite à la cathode 10.

L'eau liquide concentrée à l'anode 9 est ensuite vaporisée sous l'effet de la chaleur régnant dans la pile à combustible 2, puis cette vapeur est emportée par les gaz anodiques en sortie d'anode 14.

Ainsi, en concentrant l'eau à l'anode 9, seuls les gaz anodiques sortent humides. De la même façon que dans le premier mode de réalisation, le débit de gaz sec emportant la vapeur est donc diminué et comme vu plus haut, on augmente ainsi la température basse T. Ainsi, pour une pile à combustible fonctionnant à 80°C et 3 bar absolus, dans le cas d'un fonctionnement classique avec récupération d'eau à l'anode et à la cathode, la température basse est proche de 61°C. Avec une concentration de l'eau à l'anode, cette température est proche de 81°C.

Les gaz sortant de l'anode 9 en sortie d'anode 14 sont acheminés vers le condenseur unique 4. Le condenseur 4 sert de source froide et permet de condenser la vapeur d'eau contenue dans les gaz anodiques. L'eau ainsi condensée est ensuite acheminée via la conduite 7a vers le réservoir d'eau 7 destiné à alimenter en eau le reformeur 5. Les gaz non condensés sont acheminés vers le brûleur 3, également alimenté en air via la conduite 8a par le dispositif d'alimentation en air 8. Les gaz issus du brûleur 3 sont évacués du circuit en sortie de brûleur 17.

Les gaz sortant de la cathode 10 sont l'oxygène et l'azote issus du dispositif d'alimentation en air 8. Ces gaz sont dépourvus de vapeur d'eau puisque celle-ci est concentrée à l'anode 9. Ils sont directement évacués du circuit en sortie de cathode 15.

Parmi les avantages de l'invention qui ne peuvent pas être réalisés en utilisant l'enseignement du document KR-2001096359A, dans la présente invention les intérêts de transfert d'eau total induit sont mis en évidence d'un point de vue système. Toujours dans ce cas, dans la présente invention, c'est la quantité de charges sulfonées conductrices qui est modifiée pour créer le gradient et envoyer toute l'eau soit à l'anode, soit à la cathode, suivant le positionnement de la membrane. Dans un mode de réalisation de la présente invention, l'eau est concentrée à l'anode, et ceci a comme effet particulier d'obtenir un meilleur bilan thermique.

**Revendications**

1. Système de traction électrique pour véhicule automobile comprenant une pile à combustible (2) présentant au moins un ensemble de deux électrodes (9,10) munies chacune d'une entrée et d'une sortie d'électrode, une membrane électrolytique (11) située entre les deux électrodes (9,10), **caractérisé en ce que** la membrane électrolytique (11) comprend des charges conductrices de protons réparties dans l'épaisseur de la membrane (11) selon un gradient de concentration, de façon à concentrer l'eau à l'état liquide produite par la pile à combustible sur une des électrodes (9,10), et que l'eau à l'état liquide ainsi concentrée est évacuée de la pile à combustible par une unique sortie d'électrode (14,15).

2. Système selon la revendication 1, **caractérisé en ce que** la membrane électrolytique (11) est une membrane multi-couches.

3. Système selon la revendication 1 ou 2, **caractérisé en ce que** la concentration maximale en charges conductrices de la membrane (11) est située du côté de l'anode (9), de façon à concentrer l'eau à l'état liquide produite par la pile à combustible (2) sur l'anode (9).

4. Système selon la revendication 1 ou 2, **caractérisé en ce que** la concentration maximale en charges conductrices de la membrane (11) est située du côté de la cathode (10), de façon à concentrer l'eau à l'état liquide produite par la pile à combustible (2) sur la cathode (10).

5. Système selon l'une quelconque des revendications précédentes, **caractérisé en ce que** l'unique sortie d'électrode (14,15) précitée de la pile à combustible (2) est reliée à un unique condenseur (4).

6. Système selon la revendication 5, **caractérisé en ce que** l'eau condensée issue du condenseur (4) alimente un reformeur (5) capable de fournir de l'hydrogène à la pile à combustible (2), à partir d'un carburant.

7. Système selon la revendication 5 ou 6, **caractérisé en ce qu'**il comprend en outre un brûleur (3) relié à l'anode (9) pour récupérer l'énergie des gaz issus de l'anode (9).

8. Système selon les revendication 3, 5 et 7 prises ensemble, **caractérisée en ce que** le brûleur (3) est placé en aval du condenseur (4).

9. Procédé de mise en oeuvre d'une pile à combustible (2) dans un système de traction électrique pour véhicule automobile, **caractérisé en ce qu'**il comprend les étapes principales successives suivantes:

   - concentration de l'eau à l'état liquide produite par la pile à combustible (2) sur une des électrodes (9,10) à l'aide d'une membrane électrolytique (11) comprenant des charges conductrices de protons réparties dans l'épaisseur de la membrane (11) selon un gradient de concentration,
   - vaporisation dans cette électrode (9,10) de l'eau à l'état liquide ainsi concentrée,
   - condensation de l'eau vaporisée dans un condenseur (4) relié à la sortie de ladite électrode (9,10),
   - utilisation de l'eau ainsi condensée pour alimenter un reformeur (5) capable de générer de l'hydrogène alimentant la pile à combustible (2).

10. Un véhicule comportant un système selon l'une des quelconques revendications 1 à 8, ou une pile à combustible mise en oeuvre par un procédé selon la revendication 9.

**Claims**

1. Electric traction system for motor vehicles comprising a fuel cell (2) having at least one set of two electrodes (9, 10) each provided with an electrode input and output, an electrolytic membrane (11) situated between the two electrodes (9, 10), **characterized in that** the electrolytic membrane (11) comprises conductive proton charges distributed in the thickness of the membrane (11) according to a concentration gradient, so as to concentrate the water produced in the liquid state by the fuel cell on one of the electrodes (9, 10), and that the duly concentrated water in the liquid state is evacuated from the fuel cell by a single electrode output (14, 15).

2. System according to Claim 1, **characterized in that** the electrolytic membrane (11) is a multilayer membrane.

3. System according to Claim 1 or 2, **characterized in that** the maximum concentration in terms of conductive charges of the membrane (11) is situated on the side of the anode (9), so as to concentrate the water produced in the liquid state by the fuel cell (2) on the anode (9).

4. System according to Claim 1 or 2, **characterized in that** the maximum concentration in terms of conductive charges of the membrane (11) is situated on the side of the cathode (10), so as to concentrate the water produced in the liquid state by the fuel cell (2) on the cathode (10).

5. System according to any one of the preceding claims, **characterized in that** the abovementioned single electrode output (14, 15) of the fuel cell (2) is linked to a single condenser (4).

6. System according to Claim 5, **characterized in that** the condensed water from the condenser (4) feeds a reformer (5) capable of supplying hydrogen to the fuel cell (2), from a fuel.

7. System according to Claim 5 or 6, **characterized in that** it also comprises a burner (3) linked to the anode (9) to recover the energy of the gases coming from the anode (9).

8. System according to Claims 3, 5 and 7 taken together, **characterized in that** the burner (3) is placed downstream of the condenser (4).

9. Method of implementing a fuel cell (2) in an electric traction system for motor vehicles, **characterized in that** it comprises the following successive main steps:

- concentration of the water produced in the liquid state by the fuel cell (2) on one of the electrodes (9, 10) using an electrolytic membrane (11) comprising conductive proton charges distributed in the thickness of the membrane (11) according to a concentration gradient,
- vaporization in this electrode (9, 10) of the duly concentrated water in the liquid state,
- condensation of the vaporized water in a condenser (4) linked to the output of said electrode (9, 10),
- use of the duly condensed water to feed a reformer (5) capable of generating hydrogen feeding the fuel cell (2).

10. Vehicle comprising a system according to any one of Claims 1 to 8, or a fuel cell implemented by a method according to Claim 9.

**Patentansprüche**

1. Elektrisches Antriebsystem für Kraftfahrzeug, das eine Brennstoffzelle (2) enthält, die wenigstens eine Gesamtheit aus zwei Elektroden (9, 10) aufweist, wovon jede mit einem Elektrodeneingang und einem Elektrodenausgang versehen ist, wobei sich zwischen den zwei Elektroden (9, 10) eine elektrolytische Membran (11) befindet, **dadurch gekennzeichnet, dass** die elektrolytische Membran (11) leitende Füllstoffe aus Protonen enthält, die in Dickenrichtung der Membran (11) gemäß einem Konzentrationsgradienten verteilt sind, derart, dass Wasser in flüssigem Zustand, das durch die Brennstoffzelle erzeugt wird, bei einer der Elektroden (9, 10) konzentriert wird und dass Wasser im flüssigen Zustand, das auf diese Weise konzentriert ist, aus der Brennstoffzelle durch einen einzigen Elektrodenausgang (14, 15) abgeführt wird.

2. System nach Anspruch 1, **dadurch gekennzeichnet, dass** die elektrolytische Membran (11) eine Mehrschichtmembran ist.

3. System nach Anspruch 1 oder 2, **dadurch gekennzeichnet, dass** sich die maximale Konzentration an leitenden Füllstoffen der Membran (11) auf Seiten der Anode (9) befindet, derart, dass das Wasser im flüssigen Zustand, das durch die Brennstoffzelle (2) erzeugt wird, bei der Anode (9) konzentriert wird.

4. System nach Anspruch 1 oder 2, **dadurch gekennzeichnet, dass** sich die maximale Konzentration an leitenden Füllstoffen der Membran (11) auf Seiten der Katode (10) befindet, derart, dass das Wasser im flüssigen Zustand, das durch die Brennstoffzelle (2) erzeugt wird, bei der Katode (10) konzentriert wird.

5. System nach einem der vorhergehenden Ansprüche, **dadurch gekennzeichnet, dass** der oben genannte einzige Elektrodenausgang (14, 15) der Brennstoffzelle (2) mit einem einzigen Kondensator (4) verbunden ist.

6. System nach Anspruch 5, **dadurch gekennzeichnet, dass** das vom Kondensator (4) ausgegebene kondensierte Wasser einen Reformer (5) versorgt, der der Brennstoffzelle (2) ausgehend von einem Kraftstoff Wasserstoff zuführen kann.

7. System nach Anspruch 5 oder 6, **dadurch gekennzeichnet, dass** es außerdem einen Brenner (3) enthält, der mit der Anode (9) verbunden ist, um die Energie der von der Anode (9) abgegebenen Gase zurückzugewinnen.

8. System nach der Gesamtheit der Ansprüche 3, 5 und 7, **dadurch gekennzeichnet, dass** der Brenner (3) stromabseitig des Kondensators (4) angeordnet ist.

9. Verfahren zum Betreiben einer Brennstoffzelle (2) in einem elektrischen Antriebssystem für Kraftfahrzeug, **dadurch gekennzeichnet, dass** es die folgenden aufeinander folgenden Hauptschritte enthält:

   - Konzentrieren von Wasser im flüssigen Zustand, das durch die Brennstoffzelle (2) erzeugt wird, bei einer der Elektroden (9, 10) mit Hilfe einer elektrolytischen Membran (11), die leitende Füllstoffe aus Protonen enthält, die in Dickenrichtung der Membran (11) gemäß einem Konzentrationsgradienten verteilt sind,
   - Verdampfen des Wassers im flüssigen Zustand, das auf diese Weise konzentriert worden ist, in dieser Elektrode (9, 10),
   - Kondensieren des verdampften Wassers in einem Kondensator (4), der mit dem Ausgang der Elektrode (9, 10) verbunden ist,
   - Verwenden des auf diese Weise kondensierten Wassers, um einen Reformer (5) zu versorgen, der Wasserstoff erzeugen kann, mit dem die Brennstoffzelle (2) versorgt wird.

10. Fahrzeug, das ein System nach einem der Ansprüche 1 bis 8 oder eine Brennstoffzelle, die durch ein Verfahren nach Anspruch 9 betrieben wird, enthält.

FIG_1

EP 1 525 635 B1

FIG_2

EP 1 525 635 B1

9

## RÉFÉRENCES CITÉES DANS LA DESCRIPTION

**Documents brevets cités dans la description**

- KR 2001096359 A